# EUROPEAN PATENT SPECIFICATION

(11) **EP 4 536 506 B1**
(45) Date of publication and mention of the grant of the patent: **04.11.2026**
(21) Application number: 23732039.5
(22) Date of filing: 09.06.2023
(51) Int. Cl.: B60N 2/01, B64D 11/06

(54) **SEATING SYSTEM FOR AN AIRCRAFT**
SITZSYSTEM FÜR EIN FLUGZEUG
SYSTÈME DE SIÈGE POUR AÉRONEF

(30) Priority: 10.06.2022 GB 202208515
(43) Date of publication of application: 16.04.2025
(73) Proprietor: Ersan, Ali, London SW2 2YG (GB)
(72) Inventor: Ersan, Ali, London SW2 2YG (GB)
(74) Representative: Kilburn & Strode LLP
(86) International application number: PCT/EP2023/065441
(87) International publication number: WO 2023/237714

(56) References cited:
- DE-A1- 102014 104 054
- FR-A1- 3 105 176

## Description

This disclosure generally relates to aircraft seating systems. More particularly, specifically arranged passenger seat units for an aircraft are disclosed.

A passenger aircraft typically comprises one or two aisles. The number of aisles typically but not necessarily depends on the width of the aircraft body. Seats in a passenger aircraft are typically arranged in longitudinal columns along the one or more aisles. A passenger aircraft can be divided into cabins, and include different cabin types, commonly called "classes". Passenger aircrafts can be divided into economy, premium economy, business and first-class seating areas, or cabins. The cabin types can be named differently by different aircraft operators. For clarity, in the following the cabins are divided between economy, premium economy, business and first-class cabins, unless considered necessary to use more specific or different categorization of the cabin types.

An important difference between the cabin types is the level of passenger comfort. The cabin designs and features providing the differentiation can be significantly different in different classes. For example, in the economy class seats are commonly arranged in straight longitudinal columns of adjacent seats in rows with shared armrests, small if any tray like tables, relatively shallow backrest reclines (if any) and short pitch between the seat in successive rows. In the higher, i.e., premium classes comfort is a much more important design factor. Typically, a premium economy and business class cabins have wider seats with deeper recline and overall feeling of more space and comfort. Additional comfort increasing features can also be provided, such as footrests, fixed and/or bigger tables, storage space, monitors and so on.

Deeper recline, greater pitch between the seats, wider seats and other comfort increasing features can use more floor space. This limits the number of seats. Auxiliary comfort increasing equipment such as fixed tables, TV monitors and personal storage space occupies even more of the limited cabin space within the aircraft. Thus improved use of the space while still offering comfort may be desirable.

FR 3105176 A1 describes, in accordance with its abstract, an aircraft cabin having a longitudinal axis and comprising at least one aisle and an arrangement of seating units, a seating unit comprising in particular a seat equipped with a seat cushion and a backrest as well as a foot area, said seat being movable between a seated position and a bed position, said arrangement of seating units comprising: at least one rear group of two seat units, at least one group in front of two seat units, each group of two seat units comprising one seat unit arranged on the side of the circulation aisle, referred to as the "aisle side seat unit" and one seat unit arranged on the side of a window, referred to as the "window side seat unit", each seat of a group of seat units having an axis forming a non-zero angle with respect to the longitudinal axis of the aircraft cabin, such that the seats of each group are facing the aisle, a first access passage to the circulation aisle associated with the window-side seat unit of the rear group extending between the foot area and the seat of the aisle-side seat unit of the rear group, and a second access passage to the circulation corridor associated with the window side seat unit of the rear group extending between the aisle side seat unit of the front group and the foot area of the aisle side seat unit of the rear group.

According to an aspect there is provided a passenger seating arrangement for an aircraft cabin, comprising:
a first seat unit configured to be arranged in an angle to an aisle of the aircraft cabin and comprising a first seat and an adjacent second seat, wherein the first seat is configured to be next to the aisle and is forward offset relative to the second seat by a first offset,
a second seat unit behind the first seat unit, wherein the second seat unit is configured to be arranged in an angle to the aisle, and
comprising a third seat and an adjacent fourth seat, wherein the third seat is configured to be next to the aisle and is forward offset relative to the fourth seat by the first offset, wherein
each of the seats comprises a back rest and a seat pan and is configured for an adjustment range between an upright position and a reclined position, and each seat is provided with a leg space in front of the seat having a width defined by the width of the seat pan, and the first seat unit and the second seat unit and the seats thereof are configured to be angled towards the aisle such that
the width of the leg space of the third seat of the second seat unit does not extend underneath the first seat and the second seat of the first seat unit,
the width of the leg space of the fourth seat of the second seat unit does not extend underneath the second seat of the first seat unit and extends only partially underneath the first seat of the first seat unit,
the second seat is forward offset relative to the first seat in relation to the aisle by a second offset, and
the fourth seat is forward offset relative to the third seat in relation to the aisle by the second offset.

The angle of the seat units to the aisle measured as an angle between the centre line between the two seats and the centre line of the aisle is in the range of 15 to 50 degrees. According to a specific arrangement the angle is about 38 degrees.

The first and second seats may be arranged in a substantially parallel configuration in a seat unit. Alternatively, the first and second passenger seats can be angled relative to each other in a seat unit.

A separate egress may be provided for each of the first and second seats of the angled seat units for providing access to the aisle via a respective egress. Alternatively, a shared egress may be provided for providing access to the aisle for the first and second seats of the seat units.

The plan view of the second seat can be a mirror image of the first seat.

The shape of at least one corner of the first and/or second seat may be formed depending on the positioning of the seat units relative to the cabin walls and/or the aisle. The shape of at least one corner of a leg rest of the first and/or second seat may be formed to enable direct access from the adjacent seat to the aisle.

The reclined position may comprise a semi-reclined position or a full flat position. The fourth seat in the full flat position may be arranged in tilted position such that the leg end of the fourth seat partially extends under the first seat.

The first seat unit and second seat unit comprise at least one further similarly angled and offset seat.

The passenger seating arrangement may be configured for an aircraft cabin comprising a single aisle cabin or a twin aisle cabin.

The middle column of seats can comprise seat units comprising seats angled and offset similarly to first and second seat units on a window side of the aisle.

The middle column of seats can comprise at least three angled and offset seats.

Columns of seats to the left from the left aisle can comprise rows of left seat units angled towards the left aisle and columns of seats to the right from the right aisle can comprise right seat units angled towards the right aisle. Rows of seats of the middle column of seats can comprise left seat units and adjacent right seat units, where the left seat units are angled towards the right aisle and the right seat units are angled towards the left aisle.

The invention will become more fully understood from the detailed description of certain examples and the accompanying drawings, in which:
FIGURE 1 is a top plan view of an example of a single aisle cabin with double seat units arranged according to the herein disclosed principles;
FIGURES 2A, 2B and 2C show views of a seat unit in upright, semi-reclined and fully reclined positions; and
FIGURES 3 to 10 are top plan views of further examples of seat units arranged in a cabin according to the herein disclosed principles.

The following description gives an exemplifying description of some possibilities to practise the invention. Although the specification may refer to "an", "one", or "some" examples or embodiment(s) in several locations of the text, this does not necessarily mean that each reference is made to the same example of embodiment(s), or that a particular feature only applies to a single example or embodiment. Single features of different examples and embodiments may also be combined to provide other embodiments.

The following describes with reference to the appended drawings certain detailed examples for nestled arrangements of seat units in aircraft cabin. Seat units comprising at least two adjacent passenger seats offset relative to each other are also described. The herein described principles and features can optimise use of floor space on an aircraft. Certain embodiments can increase passenger comport.

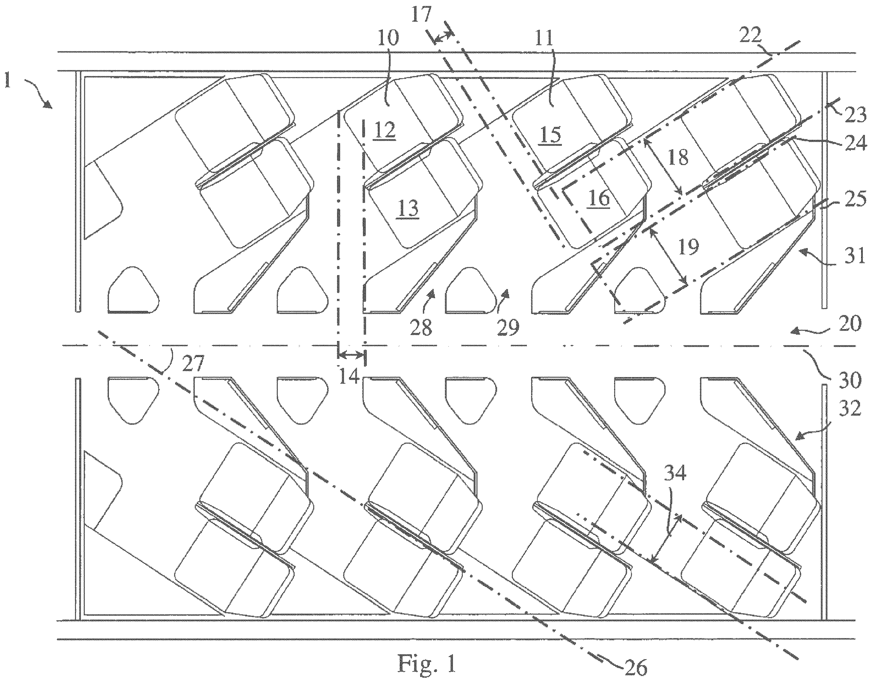

Figure 1 shows a schematic plan view of a nestled passenger seating system for a cabin 1 of a single aisle 20 aircraft in accordance with an example. The longitudinal centreline of the aisle 20 extending through the cabin 1 is indicated by the dashed line 30. The seating system comprises a plurality of seat units 10, 11 located in right column 32 and left column 31 on either side of the longitudinal aisle 20 when viewed from the front. In this example the cabin 1 has eight double seat units providing sixteen passenger seats.

The following describes in more detail the arrangement between two successive seat units 10, 11 repeated throughout the cabin 1 between successive seat units. Each of the seat units comprise a first reclining seat 13, 16 and an adjacent second reclining seat 12, 15. The seats comprise a backrest and a seat pan. The adjacent reclining seats are independently moveable between an upright position and a reclined position. In the Figure 1 example all seats are in upright position.

The arrangement of the reclining seats of the seat units can be such that they do not recline in a full flat position. Alternatively, the seats can recline into a full flat position. In this specification the term reclined is indented to cover both the fully reclined and semi-reclined positions. Semi-reclined shall be construed to mean a seat that does not go down to a full flat position. Such semi-reclining seat configuration is commonly used in business class and premium economy style cabins.

The two seats of the seat unit can be reclined independently from each other over a reclining range between the extreme reclining positions of upright and reclined. The seat pan can move forward, for example about 10 inches / 25 cm, as the back seat reclines. The concept of reclining passenger seat and different possibilities for the mechanisms enabling the movement are well known and therefore are not explained in detail here.

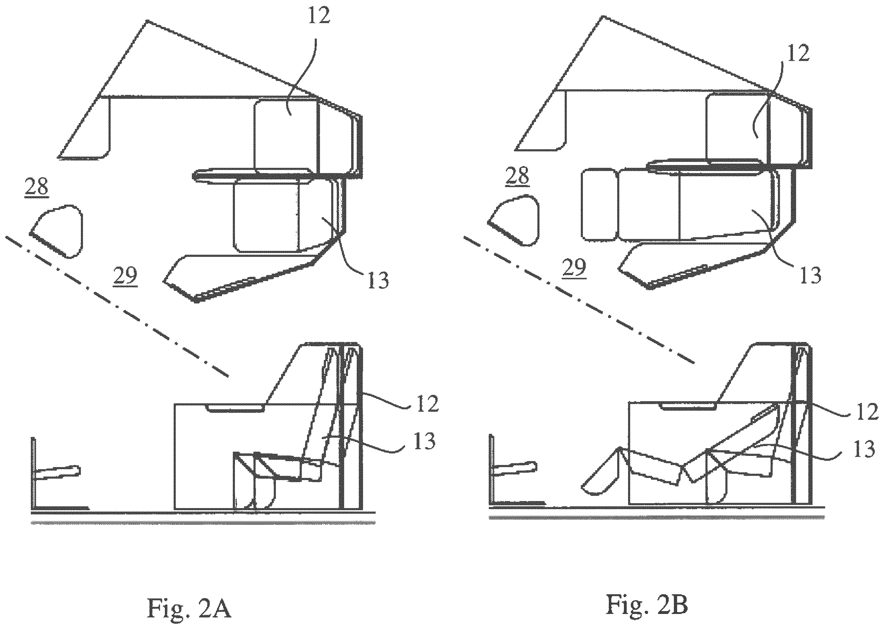

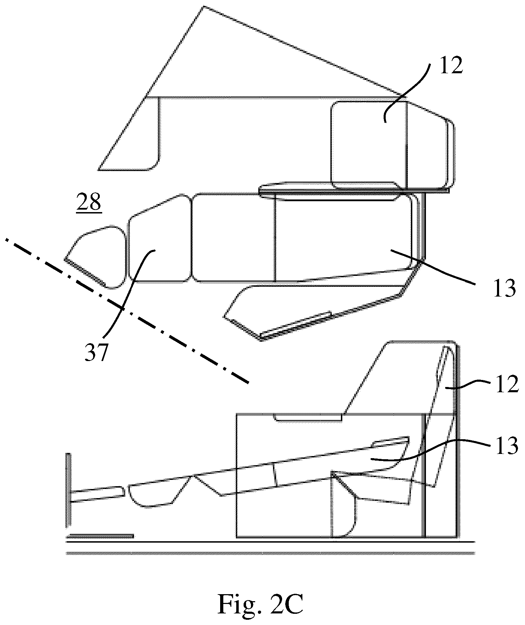

Figures 2A, 2B and 2C illustrate examples of the different reclining seat positions as top plan and side views of a seats 12 and 13. Angling of the seat unit relative to the aisle is denoted by the dotted line in the top plan views.

Figure 2A shows seats 12 and 13 in upright position. Figure 2B the aisle seat 13 is in a semi-reclined or "lazy Z" position. Both seats 12 and 13 have direct access to the aisle through egresses 28 and 29. Passenger on the window seat 12 does not need to step over the legs of the passenger on the aisle seat 13, even when seat 13 is reclined.

Figure 2C shows an aisle seat 13 in a fully reclined, or full flat position. Seat 12 can also be reclined in full flat position. The seats are not in a level position but tilted such that the feet end of the seat 12 can extend partially under the aisle seat in front.

The footrest 37 can be shaped such that the egress 28 provides direct access for the passenger on the window seat 12 to the aisle.

The first passenger seat 13 and the second passenger seat 12 of the double seat unit 10 can be configured to have substantially similar plan view contour in the reclined and upright positions. This can apply to the seats over the entire reclining range. Examples for different detail of the contour such that the available space can be efficiently and/or flexibly used are given later in this description.

Efficient use of the floor space can be achieved by staggering the seat units 10, 11 into nestled herringbone configuration relative to the aisle instead of staggering the individual seats 12, 13, 15 and 16 in the columns. The efficiency of the herringbone configuration can further be improved by specific offsetting between the seats of the seat units in the herringbone formation. That is, adjacent seats of the seat units can be offset relative to each other by a first offset 17 and also relative to the aisle by a second offset 14. Examples of this are shown in the Figures and explained in more detail below.

The second passenger seat 12 of the seat unit 10 is located further from the aisle than the first passenger seat 13. In the single aisle example the second seat is commonly referred to as the window seat and the first seat is referred to as aisle seat. The angling of the centre line of the seat units to the aisle 20 is indicated by the dashed line 26 and the angle to the centre line 30 is denoted by 27. In Figure 1 the first seat 13 and the second seat 12 are parallel to each other and therefore the angle of the individual seats to the aisle corresponds to the angle of the seat units to the aisle 20.

The first seat unit 10 and the second seat unit 11 and the seats thereof are arranged into an angle 27 to the centre line 30 of the aisle 20 such that the width 19 of the leg space of the third seat 16 of the second seat unit 11 does not extend underneath the first seat 13 and the second seat 12 of the first seat unit 10. Further, the width 18 of the leg space of the fourth seat 15 of the second seat unit 11 does not extend underneath the second seat 12 of the first seat unit 10 and extends only partially underneath the first seat 13 of the first seat unit 10. Widths of the leg spaces can be understood as the width of the leg space available for the passenger, and can be defined, e.g., by the edges of the seats, as denoted by dotted lines 22, 23, 24 and 25 on the left and right edges of the seat pans. The leg space accommodated by the aisle and window seat passengers can be within the area denoted by the dotted lines in front the last seats in the left column 31.

The angle 27 is further designed such that the second seat 12 is forward offset relative to the first seat 13 in relation to the aisle by the second offset 14. The fourth seat 15 is similarly forward offset relative to the third seat 16 in relation to the aisle by the second offset 14.

According to an example, measured between the centre line 26 of the seat units and the centre line 30 of the aisle, the angle 27 can be in the range of 15 to 50 degrees. According to a preferred embodiment the range can be 34 to 42 degrees. According to a specific example the angle 27 is about 38 degrees.

The alignment of the seats within the staggered seat units enables more efficient use of the space. In addition, the last seat unit in each column can be positioned closer to the back end of the cabin 1 than would be the case if the adjacent seats would be aligned because first offset 17 between the adjacent seats allows positioning of the last window seat closer to the back end of the cabin. Similarly, the first seat unit can be positioned closer to the front end of the cabin.

The angle 27 can be designed such that it enables direct access paths to the aisle 20 from both the window and aisle seats, and passengers can thus be provided with direct access to the aisle via respective egresses 28 and 29. The term direct access refers herein to an access arrangement where inconvenience of so called stepover on next passenger can be avoided or at least minimised.

The egresses can be provided per individual seat of a seat unit.

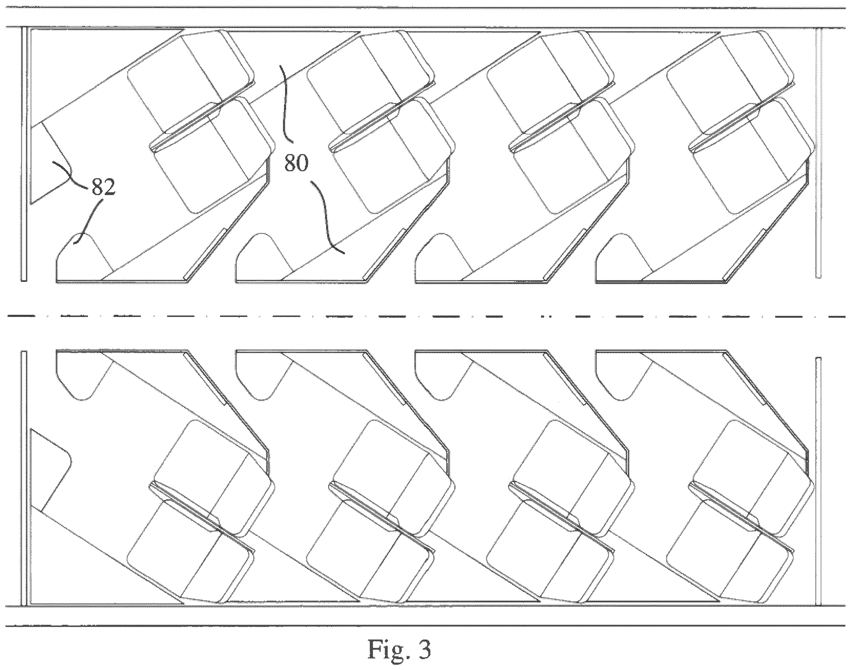

A shared egress can also be provided in certain types of seat units. An example of this is shown in Figure 3. A mix of individual and shared egresses can be provided in a column and/or cabin.

The seats can be configured to have pitch (the distance between similar points on successive seat units) in the range 30 to 60 Inches / 76 to 152 cm. Widths of each passenger seat can be in the range of seat pan widths 18 and 19 from 17 to 30 inches / 43 to 76 cm.

Figures 1 also illustrates an example how the plan view of the second passenger seat 12 can be a mirror image of the first passenger seat 13. This can be advantageous in optimising the use of space in the corner areas of the seat units. The contours of the seats can be designed to further optimise and/or facilitate more flexible use of the available space in the cabin. The mirroring provides further advantage in allowing manufacture of one design, even if in a mirror image, for all the seats.

Contours of feet rests and the back rests at the head ends of the seats can be shaped to allow more efficient use the available space in the cabin. At least some corners of the seat elements can be shaped based on the angle on which the element faces cabin structures such as the side and middle wall, the aisle, dividers and so forth. In the examples this is illustrated by the shaping of the windows seats relative to the wall.

Figure 1 shows an example of the nestled arrangement of the seat units. The amount of nestling can be defined as the distance 34 between the dashed lines indicating the portion of the leg space of the window seat extending underneath the aisle seat at front. A passenger occupying the window seat can use the space underneath the partially overlapping reclining aisle seat. Even when reclined the front does not extend too much into the space of the passenger on the window seat behind. The restricted recline and contouring of the head rest can be used to prevent the seat back of the aisle seat from landing too disruptively into the space of the window seat. Accepting nestling also allows for more flexibility in designing the cabin layout and placing of auxiliary equipment.

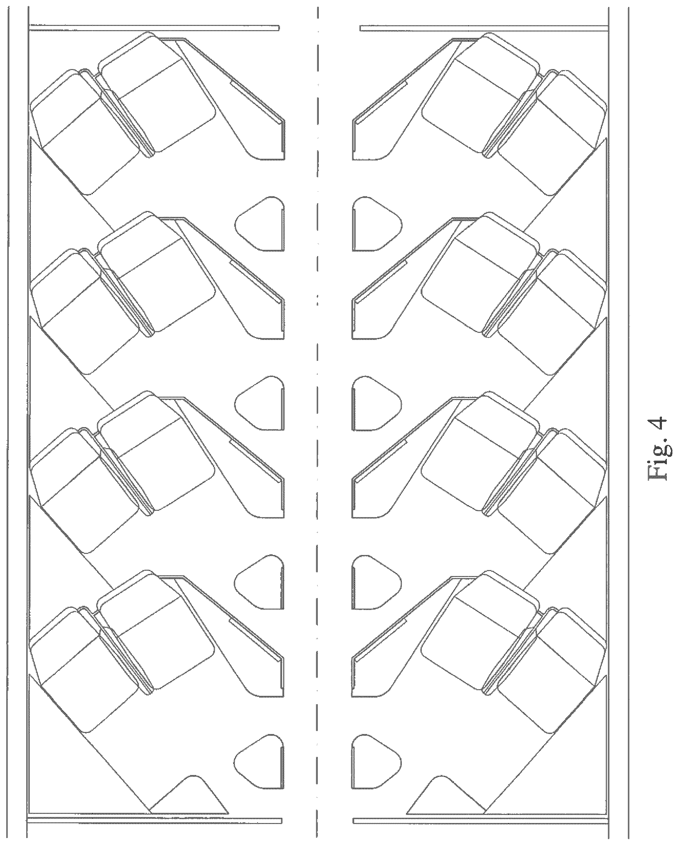

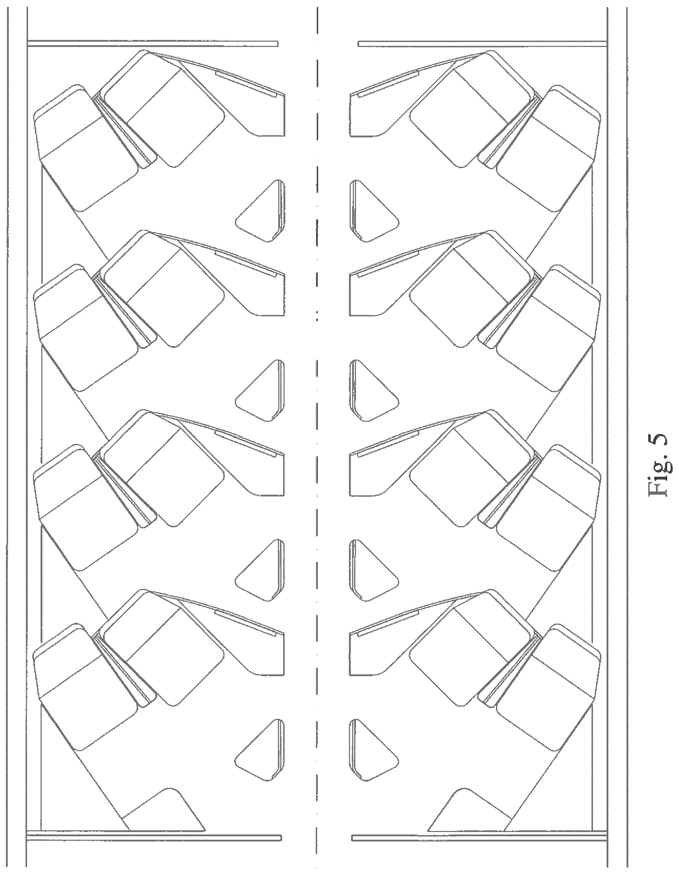

In the above explained Figures 1 and 3 the first and second passenger seats of a double seat unit are arranged substantially parallel to each other. It is also possible to have a double seat unit with seats that are slightly angled relative to each other. Figures 4 and 5 show schematic examples of modestly angled arrangement of the adjacent seats of seat units. In the example of Figure 4 the head ends of the seats are slightly separated from each other. Figure 5 shows an example where seats of seat units are angled such that there is a larger gap at the footrest ends.

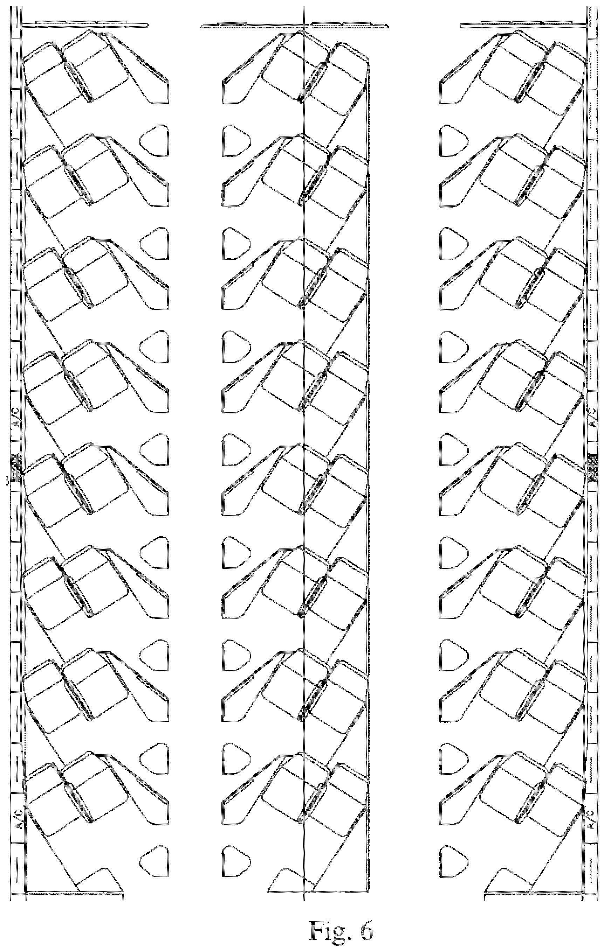

Figures 6 to 10 show examples of arranging successive seat units in a twin aisle cabin.

Figure 6 shows arrangement where each column of seat units comprises staggered and angled twin seat units.

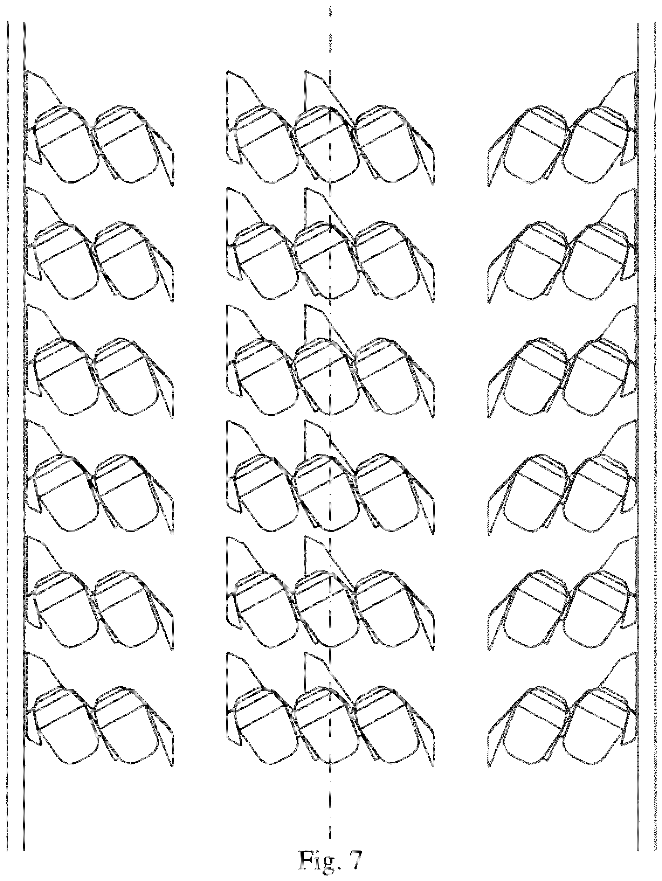

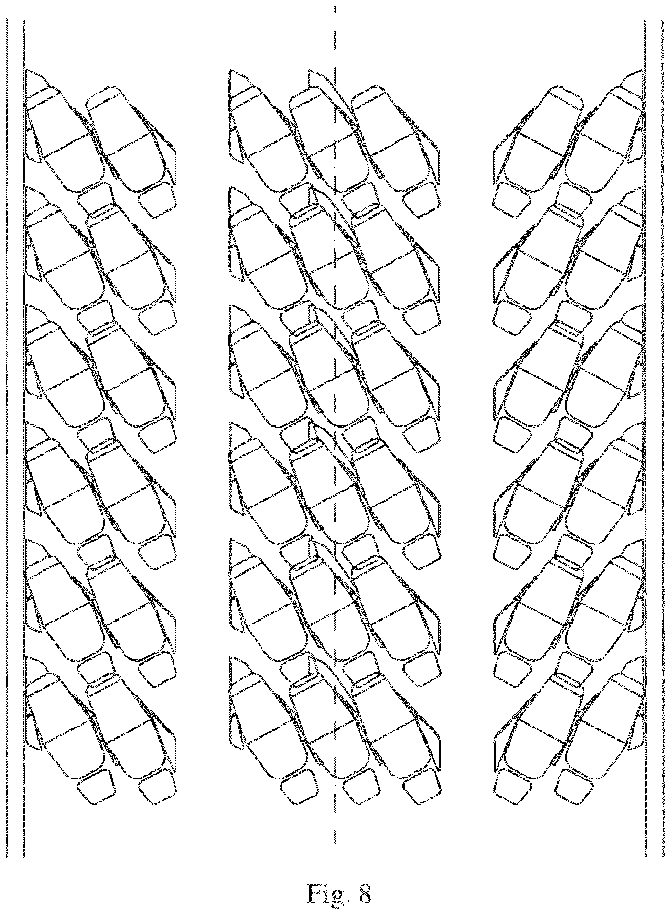

Figures 7 and 8 show an arrangement where the seat units of the window columns comprise twin seat units and the middle column comprises seat units of three similarly staggered and angled seats in upright and reclined positions. In this arrangement the egress for passenger on the right-hand seat of the middle column is to the right aisle. The middle seat passenger and the left-hand seat passenger egress is to the aisle on the left.

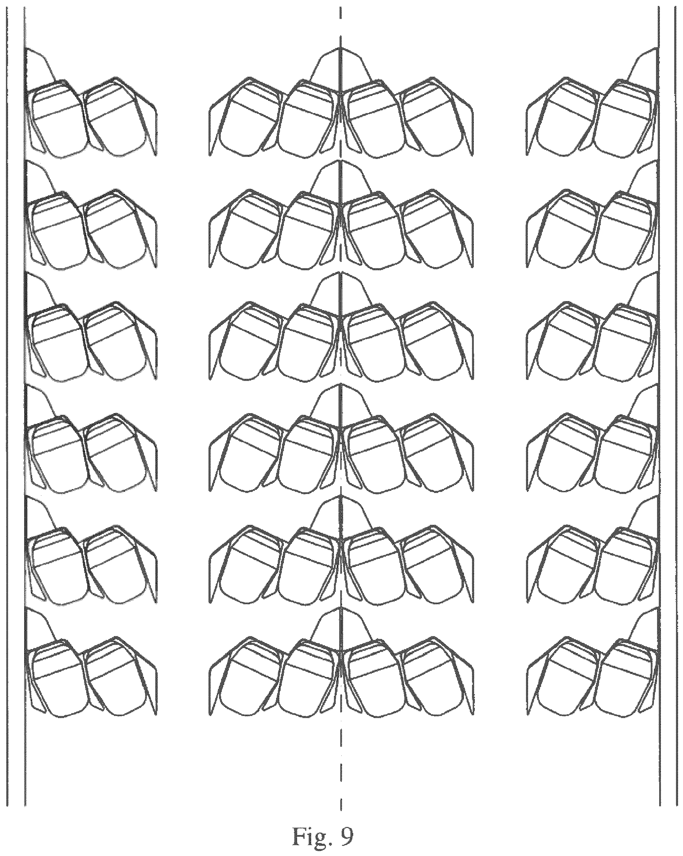

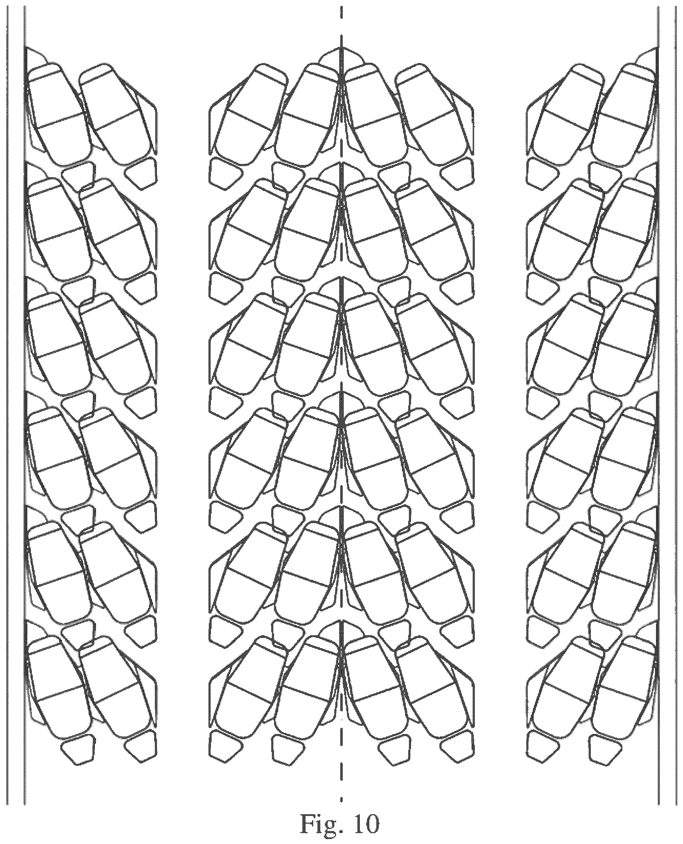

Figures 9 and 10 show arrangement where four seats are provided in the middle column in upright and reclined positions. In this arrangement the middle rows can comprise substantially similar twin seat units to the window rows and angled similarly to the aisles as shown. The egresses are accordingly to the aisles on the left and right. This can be provided by arranging columns of seats to the left from the left aisle in rows of left seat units angled towards the left aisle and columns of seats to the right from the right aisle comprising right seat units angled towards the right aisle. Rows of seats of the middle column of seats can then comprise left seat units and adjacent right seat units, the left seat units being angled towards the right aisle and the right seats unit are angled towards the left aisle.

The seats in the seat units can also be slightly angled relative to each other. In accordance with an example the angle between the seats is about 6.5 degrees.

Examples of additional features comprise furniture such as side tables 80. As shown in Figures, there is sufficient space for reasonably sized side tables for both seats of the seat units without blocking the direct access from the window seat to the aisle. Ottomans 82 can be provided for the seats. Ottomans can be provided in connection with privacy divider elements. Stowable privacy dividers can be provided such that these extend about in the middle between the seats of units and/or between the seat units. Passengers on both seats can have additional storage places. Further furniture such as monitors and tray tables that can be moved away can be provided as a part of the structure defining the seat unit.

A moveable monitor can be provided for each seat of a seat unit. The arrangement can be such that a monitor can be moved to a position where the monitor can be viewed from the adjacent seats of the seat unit. Two monitors can also be arranged such that when moved next to each other a larger screen is provided for shared viewing experience from the adjacent seats of the seat unit.

The foregoing description provides by way of exemplary and non-limiting examples a full and informative description of exemplary embodiments of the invention. While certain aspects of the invention may be illustrated and described as schematic pictorial representation and flow charts, it is well understood that these blocks, systems, techniques and methods described herein may be implemented in various manners. Therefore various modifications and adaptations may become apparent to those skilled in the relevant arts in view of the foregoing description, insofar as they fall within the scope of the claims.

## Claims

1. A passenger seating arrangement for an aircraft cabin, comprising:
a first seat unit (10) configured to be arranged in an angle to an aisle (20) of the aircraft cabin and comprising a first seat (13) and an adjacent second seat (12), wherein the first seat is configured to be next to the aisle and is forward offset relative to the second seat by a first offset (17),
a second unit (11) behind the first seat unit (10), wherein the second seat unit is configured to be arranged in an angle to the aisle, and comprising a third seat (16) and an adjacent fourth seat (15), wherein the third seat is configured to be next to the aisle and is forward offset relative to the fourth seat by the first offset,
wherein each of the seats comprises a back rest and a seat pan and is configured for an adjustment range between an upright position and a reclined position, each seat is provided with a leg space in front of the seat having a width defined by the width of the seat pan, and the first seat unit (10) and the second seat unit (11) and the seats thereof are configured to be angled towards the aisle such that:
the width (19) of the leg space of the third seat (16) of the second seat unit (11) does not extend underneath the first seat (13) and the second seat (12) of the first seat unit (10),
the width (18) of the leg space of the fourth seat (15) of the second seat unit (11) does not extend underneath the second seat (12) of the first seat unit (10) and extends only partially underneath the first seat (13) of the first seat unit (10),
the second seat (12) is forward offset relative to the first seat (13) in relation to the aisle (20) by a second offset (14), and
the fourth seat (15) is forward offset relative to the third seat (16) in relation to the aisle by the second offset.

2. A passenger seating arrangement of claim 1 wherein the angle of the seat units to the aisle (20) measured as an angle (27) between the centre line (26) between the two seats and the centre line (30) of the aisle is in the range of 15 to 50 degrees.

3. A passenger seating arrangement of claim 2 wherein the angle (27) is about 38 degrees.

4. A passenger seating arrangement of any preceding claim wherein the first and second seats (12, 13) are arranged in a substantially parallel configuration in the seat unit (10).

5. A passenger seating arrangement of any of claims 1 to 3 wherein the first and second passenger seats are angled relative to each other in the seat unit.

6. A passenger seating arrangement of any preceding claim, comprising: a separate egress (28, 29) for each of the first seats and the second seats of the angled seat units for providing access to the aisle (20) via a respective egress; or a shared egress for providing access to the aisle for the first seats and second seats of the seat units.

7. A passenger seating arrangement of any preceding claim wherein the plan view of the second seat (12) is a mirror image of the first seat (13).

8. A passenger seating arrangement of any preceding claim, wherein shape of at least one corner of the first and/or second seat is formed depending on the positioning of the seat units relative to the cabin walls and/or the aisle, and/or, wherein shape of at least one corner of a leg rest of the first and/or second seat is formed for enabling direct access from the adjacent seat to the aisle.

9. A passenger seating arrangement of any preceding claim, wherein the reclined position comprises semi-reclined position or a full flat position.

10. A passenger seating arrangement of any of claims 1 to 8, wherein the reclined position comprises a full flat position and the fourth seat (15) in the full flat position is tilted such that the leg end of the fourth seat partially extends under the first seat (13).

11. A passenger seating arrangement of any preceding claim wherein the passenger seating arrangement is configured for an aircraft cabin comprising a single aisle cabin (1) or a twin aisle cabin.

12. A passenger seating arrangement of any of claims 1 to 10, wherein the aircraft cabin comprises a twin aisle cabin and the middle column of seats comprises seat units comprising seats angled and offset similarly to first and second seat units on a window side of the aisle.

13. A passenger seating arrangement of claim 12, wherein the middle column of seats comprises at least three angled and offset seats.

14. A passenger seating arrangement of claim 13 wherein
the columns of seats to the left from the left aisle comprise rows of left seat units angled towards the left aisle and columns of seats to the right from the right aisle comprise right seat units angled towards the right aisle, and
rows of seats of the middle column of seats comprise corresponding left seat units and adjacent right seat units, the left seat units being angled towards the right aisle and the right seat units being angled towards the left aisle.

15. A passenger seating arrangement of any preceding claim wherein the first seat unit and second seat unit comprise at least one further similarly angled and offset seat.

## Patentansprüche

1. Passagiersitzanordnung für eine Flugzeugkabine, umfassend:
eine erste Sitzeinheit (10), die dazu ausgelegt ist, in einem Winkel zu einem Gang (20) der Flugzeugkabine angeordnet zu werden, und einen ersten Sitz (13) und einen angrenzenden zweiten Sitz (12) umfassend, wobei der erste Sitz dazu ausgelegt ist, neben dem Gang zu sein und gegenüber dem zweiten Sitz um einen ersten Versatz (17) nach vorne versetzt ist,
eine zweite Einheit (11) hinter der ersten Sitzeinheit (10), wobei die zweite Sitzeinheit dazu ausgelegt ist, in einem Winkel zum Gang angeordnet zu sein, und einen dritten Sitz (16) und einen angrenzenden vierten Sitz (15) umfassend, wobei der dritte Sitz dazu ausgelegt ist, neben dem Gang zu sein und gegenüber dem vierten Sitz um den ersten Versatz nach vorne versetzt ist,
wobei jeder der Sitze eine Rückenlehne und eine Sitzschale umfasst und für einen Einstellbereich zwischen einer aufrechten Position und einer geneigten Position konfiguriert ist, jeder Sitz mit einem Beinraum vor dem Sitz versehen ist, der eine Breite aufweist, die durch die Breite der Sitzschale definiert ist, und die erste Sitzeinheit (10) und die zweite Sitzeinheit (11) und deren Sitze dazu ausgelegt sind, zum Gang hin abgewinkelt zu sein, sodass:
die Breite (19) des Beinraums des dritten Sitzes (16) der zweiten Sitzeinheit (11) sich nicht unterhalb des ersten Sitzes (13) und des zweiten Sitzes (12) der ersten Sitzeinheit (10) erstreckt,
die Breite (18) des Beinraums des vierten Sitzes (15) der zweiten Sitzeinheit (11) sich nicht unter den zweiten Sitz (12) der ersten Sitzeinheit (10) erstreckt und sich nur teilweise unter den ersten Sitz (13) der ersten Sitzeinheit (10) erstreckt,
der zweite Sitz (12) gegenüber dem ersten Sitz (13) in Bezug auf den Gang (20) um einen zweiten Versatz (14) nach vorne versetzt ist, und
der vierte Sitz (15) gegenüber dem dritten Sitz (16) in Bezug auf den Gang um den zweiten Versatz nach vorne versetzt ist.

2. Passagiersitzanordnung nach Anspruch 1, wobei der Winkel der Sitzeinheiten zu dem Gang (20), gemessen als ein Winkel (27) zwischen der Mittellinie (26) zwischen den zwei Sitzen und der Mittellinie (30) des Gangs, im Bereich von 15 bis 50 Grad liegt.

3. Passagiersitzanordnung nach Anspruch 2, wobei der Winkel (27) etwa 38 Grad beträgt.

4. Passagiersitzanordnung nach einem der vorhergehenden Ansprüche, wobei der erste und der zweite Sitz (12, 13) in einer im Wesentlichen parallelen Konfiguration in der Sitzeinheit (10) angeordnet sind.

5. Passagiersitzanordnung nach einem der Ansprüche 1 bis 3, wobei der erste und der zweite Passagiersitz in der Sitzeinheit relativ zueinander abgewinkelt sind.

6. Passagiersitzanordnung nach einem der vorhergehenden Ansprüche, umfassend: einen separaten Ausgang (28, 29) für jeden der ersten Sitze und der zweiten Sitze der abgewinkelten Sitzeinheiten zum Bereitstellen eines Zugangs zu dem Gang (20) über einen jeweiligen Ausgang; oder einen gemeinsamen Ausgang zum Bereitstellen eines Zugangs zu dem Gang für die ersten Sitze und zweiten Sitze der Sitzeinheiten.

7. Passagiersitzanordnung nach einem der vorhergehenden Ansprüche, wobei die Draufsicht des zweiten Sitzes (12) ein Spiegelbild des ersten Sitzes (13) ist.

8. Passagiersitzanordnung nach einem der vorhergehenden Ansprüche, wobei die Form mindestens einer Ecke des ersten und/oder zweiten Sitzes in Abhängigkeit von der Positionierung der Sitzeinheiten relativ zu den Kabinenwänden und/oder dem Gang gebildet ist, und/oder wobei die Form mindestens einer Ecke einer Beinauflage des ersten und/oder zweiten Sitzes ausgebildet ist, um einen direkten Zugang von dem benachbarten Sitz zu dem Gang zu ermöglichen.

9. Passagiersitzanordnung nach einem der vorhergehenden Ansprüche, wobei die geneigte Position eine halbgeneigte Position oder eine vollständig flache Position umfasst.

10. Passagiersitzanordnung nach einem der Ansprüche 1 bis 8, wobei die geneigte Position eine vollständig flache Position umfasst und der vierte Sitz (15) in der vollständig flachen Position derart gekippt ist, dass sich das Beinende des vierten Sitzes teilweise unter dem ersten Sitz (13) erstreckt.

11. Passagiersitzanordnung nach einem der vorhergehenden Ansprüche, wobei die Passagiersitzanordnung für eine Flugzeugkabine konfiguriert ist, die eine Ein-Gang-Kabine (1) oder eine Zwei-Gang-Kabine umfasst.

12. Passagiersitzanordnung nach einem der Ansprüche 1 bis 10, wobei die Flugzeugkabine eine Zwei-Gang-Kabine umfasst und die mittlere Sitzspalte Sitzeinheiten mit Sitzen umfasst, die in ähnlicher Weise wie die ersten und zweiten Sitzeinheiten auf einer Fensterseite des Gangs abgewinkelt und versetzt sind.

13. Passagiersitzanordnung nach Anspruch 12, wobei die mittlere Sitzspalte mindestens drei abgewinkelte und versetzte Sitze umfasst.

14. Passagiersitzanordnung nach Anspruch 13, wobei
die vom linken Gang links liegenden Sitzspalten Reihen von linken Sitzeinheiten umfassen, die zum linken Gang hin abgewinkelt sind, und Sitzspalten, die vom rechten Gang aus rechts liegen, rechte Sitzeinheiten umfassen, die zum rechten Gang hin abgewinkelt sind, und
die Sitzreihen der mittleren Sitzspalte entsprechende linke Sitzeinheiten und benachbarte rechte Sitzeinheiten umfassen, wobei die linken Sitzeinheiten zum rechten Gang hin und die rechten Sitzeinheiten zum linken Gang hin abgewinkelt sind.

15. Passagiersitzanordnung nach einem der vorhergehenden Ansprüche, wobei die erste Sitzeinheit und die zweite Sitzeinheit mindestens einen weiteren ähnlich abgewinkelten und versetzten Sitz umfassen.

## Revendications

1. Agencement de sièges passager pour une cabine d'aéronef, comprenant :
une première unité de siège (10) configurée pour être agencée en un angle relativement à un couloir (20) de la cabine d'aéronef et comprenant un premier siège (13) et un deuxième siège adjacent (12), dans lequel le premier siège est configuré pour être à côté du couloir et est décalé vers l'avant, relativement au deuxième siège, selon un premier décalage (17),
une seconde unité (11) derrière la première unité de siège (10), dans lequel la seconde unité de siège est configurée pour être agencée en un angle relativement au couloir, et comprenant un troisième siège (16) et un quatrième siège adjacent (15), dans lequel le troisième siège est configuré pour être à côté du couloir et est décalé vers l'avant, relativement au quatrième siège, selon le premier décalage,
dans lequel chacun des sièges comprend un dossier et un baquet de siège et est configuré pour une plage d'ajustement entre une position verticale et une position inclinée, chaque siège est pourvu d'un espace pour jambes devant le siège ayant une largeur définie par la largeur du baquet de siège, et la première unité de siège (10) et la seconde unité de siège (11) et les sièges de celles-ci sont configurés pour être en angle vers le couloir de manière telle que :
la largeur (19) de l'espace pour jambes du troisième siège (16) de la seconde unité de siège (11) ne s'étend pas en dessous du premier siège (13) et du deuxième siège (12) de la première unité de siège (10),
la largeur (18) de l'espace pour jambes du quatrième siège (15) de la seconde unité de siège (11) ne s'étend pas en dessous du deuxième siège (12) de la première unité de siège (10) et s'étend seulement partiellement en dessous du premier siège (13) de la première unité de siège (10),
le deuxième siège (12) est décalé vers l'avant, relativement au premier siège (13), en ce qui concerne le couloir (20), selon un second décalage (14), et
le quatrième siège (15) est décalé vers l'avant, relativement au troisième siège (16), en ce qui concerne le couloir, selon le second décalage.

2. Agencement de sièges passager de la revendication 1, dans lequel l'angle des unités de siège par rapport au couloir (20), mesuré comme étant un angle (27) entre la ligne centrale (26) entre les deux sièges et la ligne centrale (30) du couloir, est dans la plage de 15 à 50 degrés.

3. Agencement de sièges passager de la revendication 2, dans lequel l'angle (27) est d'environ 38 degrés.

4. Agencement de sièges passager d'une quelconque revendication précédente, dans lequel les premier et second sièges (12, 13) sont agencés en une configuration sensiblement parallèle dans l'unité de siège (10).

5. Agencement de sièges passager de quelconques des revendications 1 à 3, dans lequel les premier et second sièges passager sont en angle l'un relativement à l'autre dans l'unité de siège.

6. Agencement de sièges passager d'une quelconque revendication précédente, comprenant : une sortie séparée (28, 29) pour chacun des premiers sièges et des seconds sièges des unités de siège en angle pour fournir un accès au couloir (20) par l'intermédiaire d'une sortie respective ; ou une sortie partagée pour fournir un accès au couloir pour les premiers sièges et les seconds sièges des unités de siège.

7. Agencement de sièges passager d'une quelconque revendication précédente, dans lequel la vue en plan du deuxième siège (12) est une image miroir du premier siège (13).

8. Agencement de sièges passager d'une quelconque revendication précédente, dans lequel une forme d'au moins un coin du premier et/ou du deuxième siège est façonnée en fonction du positionnement des unités de siège relativement aux parois de cabine et/ou au couloir, et/ou, dans lequel une forme d'au moins un coin d'un appui-jambe du premier et/ou du deuxième siège est façonnée pour permettre un accès direct, depuis le siège adjacent, au couloir.

9. Agencement de sièges passager d'une quelconque revendication précédente, dans lequel la position inclinée comprend une position semi-inclinée ou une position complètement à plat.

10. Agencement de sièges passager de quelconques des revendications 1 à 8, dans lequel la position inclinée comprend une position complètement à plat et le quatrième siège (15) dans la position complètement à plat est penché de manière telle que l'extrémité jambe du quatrième siège s'étend partiellement sous le premier siège (13).

11. Agencement de sièges passager d'une quelconque revendication précédente, dans lequel l'agencement de sièges passager est configuré pour une cabine d'aéronef comprenant une cabine à couloir unique (1) ou une cabine à deux couloirs.

12. Agencement de sièges passager de quelconques des revendications 1 à 10, dans lequel la cabine d'aéronef comprend une cabine à deux couloirs et la colonne médiane de sièges comprend des unités de siège comprenant des sièges en angle et décalés similairement à des première et seconde unités de siège sur un côté fenêtre du couloir.

13. Agencement de sièges passager de la revendication 12, dans lequel la colonne médiane de sièges comprend au moins trois sièges en angle et décalés.

14. Agencement de sièges passager de la revendication 13, dans lequel
les colonnes de sièges sur la gauche par rapport au couloir gauche comprennent des rangées d'unités de siège gauches en angle vers le couloir gauche et les colonnes de sièges sur la droite par rapport au couloir droit comprennent des unités de siège droites en angle vers le couloir droit, et
des rangées de sièges de la colonne médiane de sièges comprennent des unités de siège gauches et des unités de siège droites adjacentes correspondantes, les unités de siège gauches étant en angle vers le couloir droit et les unités de siège droites étant en angle vers le couloir gauche.

15. Agencement de sièges passager d'une quelconque revendication précédente, dans lequel la première unité de siège et la seconde unité de siège comprennent au moins un siège supplémentaire similairement en angle et décalé.
